# EUROPÄISCHE PATENTANMELDUNG

(11) **EP 3 598 354 A1**
(43) Veröffentlichungstag der Anmeldung: **22.01.2020**
(21) Anmeldenummer: 19177567.5
(22) Anmeldetag: 31.05.2019
(51) Int. Cl.: G06Q 10/04, G06Q 50/06

(54) **OFFSHORE-WINDENERGIESYSTEM**

(30) Priorität: 17.07.2018 DE 102018117254
(71) Anmelder: Innogy SE, 45128 Essen (DE)
(72) Erfinder: BARTMINN, Daniel, 25335 Elmshorn (DE); SCHLÜTER, Thorsten, 25355 Barmstedt (DE); KLUGKIST, Jürgen, 21465 Reinbek (DE)
(74) Vertreter: Cohausz & Florack

(57) **Zusammenfassung**

Die Anmeldung betrifft ein Offshore-Windenergiesystem (100, 200, 300), umfassend eine Mehrzahl von Offshore-Vorrichtungen (102, 104, 202, 204), wobei die Mehrzahl von Offshore-Vorrichtungen (102, 104, 202, 204) mindestens eine Offshore-Substation (102, 202) und mindestens eine Offshore-Windkraftanlage (104, 204) umfasst, wobei mindestens eine Offshore-Vorrichtung (102, 104, 202, 204) zumindest teilweise ein an ein Fernkommunikationsnetz (114) über mindestens eine eigene Kommunikationsverbindung (112, 214) angebundenes Datenverarbeitungszentrum (108, 208, 308) mit mindestens einer Datenverarbeitungseinrichtung (110, 210.1, 210.2) umfasst, wobei die mindestens eine Datenverarbeitungseinrichtung (110, 210.1, 210.2) eingerichtet ist zum Bereitstellen von Rechenleistung für eine Abarbeitung mindestens eines über die Kommunikationsverbindung (112, 212) empfangbaren Verarbeitungsauftrags, und wobei das Offshore-Windenergiesystem (100, 200, 300) eingerichtet ist zum Versorgen des Datenverarbeitungszentrums (108, 208, 308) mit elektrischer Leistung.

## Beschreibung

Die Anmeldung betrifft ein Offshore-Windenergiesystem, umfassend eine Mehrzahl von Offshore-Vorrichtungen, wobei die Mehrzahl von Offshore-Vorrichtungen mindestens eine Offshore-Substation und mindestens eine Offshore-Windkraftanlage umfasst. Darüber hinaus umfasst die Anmeldung eine Offshore-Vorrichtung und ein Verfahren zum Betreiben eines Offshore-Windenergiesystems.

Der Bedarf an Rechenleistung für die Bearbeitung von Verarbeitungsaufträgen steigt stetig. Lediglich beispielhafte Verarbeitungsaufträge sind Blockchain-Rechenaufträge (z.B. der so genannte "Mining"-Prozess). Die Rechenleistung wird in der Regel von einem Datenverarbeitungszentrum übernommen, das über eine Mehrzahl von Rechen- bzw. Datenverarbeitungseinrichtungen verfügen kann. Die Datenverarbeitungseinrichtungen sind eingerichtet zum Bereitstellen von Rechenleistung für die Abarbeitung mindestens eines Verarbeitungsauftrags. Ein Datenverarbeitungszentrum ist hierbei an ein Fernkommunikationsnetz, insbesondere das Internet, angebunden. Über das Fernkommunikationsnetz können von Auftraggebern, beispielsweise in Form von Clientrechner, beispielsweise Verarbeitungsaufträge an das Datenverarbeitungszentrum übermittelt und/oder Ergebnisse von Verarbeitungsaufträgen empfangen oder eingesehen werden.

Eine Herausforderung beim Betreiben von einem derartigen Datenverarbeitungszentrum stellt dessen Energieversorgung dar. So ist der Bedarf an elektrischer Leistung eines Datenverarbeitungszentrums zum Betreiben der Datenverarbeitungseinrichtungen enorm. Neben der von den Prozessoren und sonstigen Rechenmitteln einer Datenverarbeitungseinrichtung benötigten elektrischen Leistung erfordern die aktiven Kühlsysteme zur Kühlung der Datenverarbeitungseinrichtungen eine erhebliche Menge an elektrischer Leistung.

Zudem sollte aus wirtschaftlichen Erwägungen die erforderliche elektrische Leistung kostengünstig verfügbar sein. Aus dem Stand der Technik ist es zur Lösung der Energieversorgungsproblematik bekannt, ein Datenverarbeitungszentrum benachbart zu einem Onshore-Windpark oder Solarkraftwerk zu installieren. Dies hat zwar den Vorteil, dass elektrische Leistung in Zeiten mit hohen Windgeschwindigkeiten bzw. hoher Sonnenstrahlung im Gebiet des angeschlossenen Onshore-Stromnetzes kostengünstig und in ausreichender Menge verfügbar ist. Nachteilig ist jedoch, dass insbesondere in Gebieten mit geringer Sonnen- und/oder Windwahrscheinlichkeit, wie beispielsweise in Mitteleuropa, diese Zeiten im Jahresverlauf relativ gering sind, so dass nur während weniger Zeiträume im Jahr elektrische Leistung kostengünstig verfügbar ist.

Eine weitere Herausforderung bei einem Datenverarbeitungszentrum stellt die ausreichende der in einem Datenverarbeitungszentrum zu verarbeitenden Daten dar. Neben einer sicheren Anbindung des Datenverarbeitungszentrums an das Fernkommunikationsnetz über eine gesicherte Datenverbindung, beispielsweise mittels Firewalls, Paketfilter, Contentfilter etc., ist auch eine ausreichende Absicherung des physischen Zugangs zu den Datenverarbeitungseinrichtungen erforderlich. Hierzu ist es aus dem Stand der Technik bekannt, mechanische Schutzeinrichtungen (Zäune, Wände etc.), Überwachungseinrichtungen (Kameras, Alarmanlagen etc.) und Wachpersonal einzusetzen. Nachteilig an diesen Maßnahmen sind jedoch der erforderliche Aufwand sowie Kosten für die Installierung und den Betrieb dieser physischen Sicherheitsmaßnahmen.

Daher liegt der Anmeldung die Aufgabe zugrunde, ein System bereitzustellen, welches die Bereitstellung ausreichender elektrischer Leistung, insbesondere in kostengünstiger Form, ermöglicht sowie gleichzeitig einen sicheren physischen Schutz eines Datenverarbeitungszentrums mit einem geringen Aufwand bietet.

Die Aufgabe wird gemäß einem ersten Aspekt der Anmeldung durch ein Offshore-Windenergiesystem nach Anspruch 1 gelöst. Das Offshore-Windenergiesystem umfasst eine Mehrzahl von Offshore-Vorrichtungen. Die Mehrzahl von Offshore-Vorrichtungen umfasst mindestens eine Offshore-Substation und mindestens eine Offshore-Windkraftanlage. Mindestens eine Offshore-Vorrichtung umfasst zumindest teilweise ein an ein Fernkommunikationsnetz über mindestens eine eigene Kommunikationsverbindung angebundenes Datenverarbeitungszentrum mit mindestens einer Datenverarbeitungseinrichtung. Die mindestens eine Datenverarbeitungseinrichtung ist eingerichtet zum Bereitstellen von Rechenleistung für eine Abarbeitung mindestens eines über die Kommunikationsverbindung empfangbaren Verarbeitungsauftrags. Das Offshore-Windenergiesystem ist eingerichtet zum Versorgen des Datenverarbeitungszentrums mit elektrischer Leistung.

Im Gegensatz zum Stand der Technik ist bei einer anmeldungsgemäßen Anordnung eines Datenverarbeitungszentrums an bzw. in einem Offshore-Windenergiesystem sichergestellt, dass das Datenverarbeitungszentrum in ausreichender und insbesondere kostengünstiger Weise mit elektrischer Leistung versorgt werden kann. Gleichzeitig ist aufgrund des Offshore-Standorts ein verbesserter Schutz gegenüber ein unbefugtes physisches Eindringen in das Datenverarbeitungszentrum gegeben. Die Anordnung von zusätzlichen mechanischen Schutzeinrichtungen kann entfallen, oder zumindest vermindert werden, so dass in aufwandsarmer und kostengünstiger Weise ein physischer Schutz für den Betrieb des Datenverarbeitungszentrums bereitgestellt werden kann.

Insbesondere ist anmeldungsgemäß erkannt worden, dass ein Offshore-Windenergiesystem gegenüber einem Onshore-Windenergiesystem aufgrund des Offshore-Standorts eine höhere Auslastung hat (40 bis 50 % Volllast pro Jahr bei einem Offshore-Windenergiesystem gegenüber 20 bis 30 % Volllast pro Jahr bei einem Onshore-Windenergiesystem). Zudem ist erkannt worden, dass die Offshore-Lage den Zugang von unbefugten Dritten erschwert.

Das anmeldungsgemäße Offshore-Windenergiesystem umfasst eine Mehrzahl von Offshore-Vorrichtungen. Unter dem Begriff "Offshore" ist anmeldungsgemäß zu verstehen, dass sich eine entsprechende Vorrichtung auf dem Meer befindet und mindestens 1 km, bevorzugt mindestens 6 km, besonders bevorzugt zwischen 30 und 100 km, von der Küste entfernt angeordnet ist.

Mindestens eine Offshore-Vorrichtung ist eine Offshore-Substation und mindestens eine weitere Offshore-Vorrichtung ist eine Offshore-Windkraftanlage. Ein Offshore-Windenergiesystem kann weitere Offshore-Vorrichtungsarten aufweisen, wie mindestens eine Offshore-Wetterüberwachungsstation, mindestens eine Offshore-Plattform für die Anordnung/Installierung zumindest eines Teils des Datenverarbeitungszentrums etc.

Ein anmeldungsgemäßes Offshore-Windenergiesystem umfasst mindestens eine Offshore-Substation bzw. eine Offshore-Umspannstation und eine Mehrzahl von Offshore-Windkraftanlagen. Eine Offshore-Substation kann mindestens eine Transformatoreinrichtung umfassen. Eine Offshore-Windkraftanlage ist dazu eingerichtet, die kinetische Energie des Windes mittels eines Rotors und eines Generators in elektrische Energie bzw. Leistung zu wandeln.

Offshore-Windkraftanlagen können vorzugsweise in Form von mindestens einem Strang (auch String genannt) angeordnet sein. Ein Strang kann zwei oder mehr Offshore-Windkraftanlagen umfassen, die elektrisch in Reihe angeordnet sind. Vorzugsweise kann eine Mehrzahl von Strängen vorgesehen sein. Ein Ende eines Strangs kann elektrisch mit der Offshore-Substation gekoppelt sein.

Elektrisch ist jede Offshore-Windkraftanlage des Offshore-Windenergiesystems an das Offshore-Kabelnetz des Offshore-Windenergiesystems angeschlossen. Eine Offshore-Windkraftanlage speist die aus der kinetischen Windenergie erzeugte elektrische Leistung, insbesondere einen elektrischen Strom, in das Offshore-Kabelnetz ein. Beispielsweise kann die eingespeiste Leistung über das Offshore-Kabelnetz an die Offshore-Substation geliefert werden. Ein anmeldungsgemäßes Offshore-Kabelnetz umfasst insbesondere eine Mehrzahl von Seekabeln, die elektrische Verbindungen bilden. Diese Kabel können derart dimensioniert sein, dass im Normalbetrieb auch bei maximal von den Offshore-Windkraftanlagen eingespeister Leistung die maximale Stromtragfähigkeit dieser Kabel nicht überschritten wird.

Über mindestens ein weiteres Seekabel und insbesondere eine Onshore-Substation kann mindestens ein Onshore-Stromnetz, insbesondere ein öffentliches Stromnetz, mit dem Offshore-Windenergiesystem elektrisch verbunden sein. Das Offshore-Windenergiesystem kann eingerichtet sein zum Einspeisen von elektrischer Leistung in das angeschlossene Onshore-Stromnetz.

Das Offshore-Windenergiesystem ist eingerichtet zum Versorgen des Datenverarbeitungszentrums mit elektrischer Leistung. Insbesondere kann die von der mindestens einen Offshore-Windkraftanlage generierte Leistung zum Versorgen des Datenverarbeitungszentrums, insbesondere der mindestens einen Datenverarbeitungseinrichtung, zumindest teilweise verwendet werden. Es können auch andere Leistungsquellen zur Energieversorgung alternativ oder zusätzlich eingesetzt werden.

Wie bereits beschrieben wurde, verfügt das Offshore-Windenergiesystem über ein Datenverarbeitungszentrum, das zumindest teilweise auf einer Offshore-Vorrichtung angeordnet ist, insbesondere in der Offshore-Vorrichtung integriert ist. Das Datenverarbeitungszentrum umfasst vorzugsweise eine Mehrzahl von Datenverarbeitungseinrichtungen bzw. Recheneinrichtungen.

Das Datenverarbeitungszentrum weist mindestens eine eigene Kommunikationsverbindung zu einem (öffentlichen) Fernkommunikationsnetz auf. Vorzugsweise kann das Fernkommunikationsnetz das Internet sein. Die mindestens eine Kommunikationsverbindung kann ein drahtgebundener oder drahtloser Kommunikationskanal sein. Unter einer eigenen Kommunikationsverbindung ist vorliegend insbesondere zu verstehen, dass diese Kommunikationsverbindung nur für Datentransfers verwendet wird, welche einen Bezug zu dem Betrieb des Datenverarbeitungszentrums hat, beispielsweise zu einem Verarbeitungsauftrags bzw. einer Verarbeitungsaufgabe hat, der/die von dem Datenverarbeitungszentrum ausgeführt wird, einer Wartung und/oder Aktualisierung von Software des Datenverarbeitungszentrums etc. Mit anderen Worten wird die Kommunikationsverbindung nicht für den Betrieb, insbesondere die Steuerung der Windenergieerzeugungseinrichtungen (Windkraftanlagen, Umspanneinrichtungen, Kühleinrichtungen für die elektrischen Komponenten der Windkraftanlagen oder Umspanneinrichtungen etc.) des Offshore-Windenergiesystems verwendet. Das Datenverarbeitungszentrum ist vielmehr von den Steuermitteln des Offshore-Windenergiesystems entkoppelt bzw. getrennt.

Die eigene Kommunikationsverbindung ist insbesondere eine gesicherte Kommunikationsverbindung. Beispielsweise kann mindestens eine Sicherheitseinrichtung implementiert sein, wie eine Firewall, ein Paketfilter, ein Contentfilter etc.

Die mindestens eine Datenverarbeitungseinrichtung kann (geeignete) Rechenmittel, wie mindestens einen Prozessor (z.B. CPU (Central Processing Unit), GPU (graphics processing unit), ASIC (application-specific integrated circuit) und/oder dergleichen), Speichermittel, Schnittstellen, etc. aufweisen, um den mindestens einen Verarbeitungsauftrag auszuführen. Eine Datenverarbeitungseinrichtung stellt insbesondere eine bestimmte Rechenleistung zur Abarbeitung bzw. Bearbeitung von Verarbeitungsaufträgen bzw. Rechenaufträgen, insbesondere rechenintensiven Verarbeitungsaufträgen, zur Verfügung. Hierzu weist eine anmeldungsgemäße Datenverarbeitungseinrichtung zumindest eine Leistung von mehr als 1 Gbit/s auf.

Insbesondere kann die Rechenleistung von Dritten in Anspruch genommen werden, um eine bestimmte rechenintensive Aufgabe durch das Datenverarbeitungszentrum bearbeiten zu lassen. Beispielhafte Verarbeitungsaufträge sind Blockchain-Rechenaufträge (z.B. der so genannte "Mining"-Prozess), Simulationsaufgaben, Finite-Elemente-Aufgaben, KI-Aufgaben etc. Bei einer Ausführungsform kann das Datenverarbeitungszentrum insbesondere ein Blockchain-Mining-Zentrum sein.

Bei einem anmeldungsgemäßen Verarbeitungsauftrag handelt es sich um eine Rechenaufgabe, die keinen Bezug zum Betreiben, insbesondere Steuern, der Windenergieerzeugungsanlagen des Offshore-Windenergiesystems besitzt.

Wie bereits beschrieben wurde, kann das Offshore-Windenergiesystem über eine zusätzliche Offshore-Plattform verfügen, die im Wesentlichen zur Anordnung des Datenverarbeitungszentrums eingerichtet ist. Gemäß einer ersten bevorzugten Ausführungsform des anmeldungsgemäßen Offshore-Windenergiesystems kann mindestens eine Datenverarbeitungseinrichtung des Datenverarbeitungszentrums in der mindestens einen Offshore-Windkraftanlage angeordnet, insbesondere integriert, sein. Vorzugsweise kann eine oder mehrere Datenverarbeitungseinrichtung/en in dem Turm einer Offshore-Windkraftanlage angeordnet sein. Dies hat die Vorteile, dass die Datenverarbeitungseinrichtung vor äußeren Umgebungseinflüssen geschützt ist und in einem Turm Raum für die Anordnung mindestens einer Datenverarbeitungseinrichtung (ohnehin) vorhanden ist.

Gemäß einer weiteren Ausführungsform des anmeldungsgemäßen Offshore-Windenergiesystems kann mindestens eine Datenverarbeitungseinrichtung des Datenverarbeitungszentrums in der Offshore-Substation angeordnet, insbesondere integriert, sein. Die Offshore-Substation kann vorzugsweise ein eigenes Deck zur Anordnung einer Mehrzahl von Datenverarbeitungseinrichtungen auf der Offshore-Substation umfassen. Insbesondere kann durch die Anordnung eines zusätzlichen Decks eine Vielzahl von Datenverarbeitungseinrichtungen in einem gemeinsamen Gehäuse angeordnet werden.

Wie bereits beschrieben wurde, kann gemäß einer Ausführungsform das Datenverarbeitungszentrum vorzugsweise eine Mehrzahl von Datenverarbeitungseinrichtungen umfassen. Um den vorhandenen Raum eines Offshore-Windenergiesystems optimal zu nutzen, kann insbesondere ein verteiltes Datenverarbeitungszentrum vorgesehen sein. Unter einem verteilten Datenverarbeitungszentrum ist insbesondere zu verstehen, dass zumindest zwei Datenverarbeitungseinrichtungen auf/in unterschiedlichen Offshore-Vorrichtungen angeordnet und über ein (eigenes) Kommunikationsnetz miteinander verbunden sind, um ggf. gemeinsam eine Rechenaufgabe auszuführen. Insbesondere kann gemäß einer Ausführungsform eine erste Datenverarbeitungseinrichtung in einer ersten Offshore-Vorrichtung angeordnet sein und eine weitere Datenverarbeitungseinrichtung in einer weiteren Offshore-Vorrichtung angeordnet sein. Die erste Datenverarbeitungseinrichtung kann mit der weiteren Datenverarbeitungseinrichtung über ein eigenes Kommunikationsnetz verbunden sein.

Vorzugsweise können Datenverarbeitungseinrichtungen verteilt in der Mehrzahl von Offshore-Windkraftanlagen und/oder der Offshore-Substation angeordnet sein. Um eine hohe Datensicherheit zu gewährleisten, ist vorzugsweise ein eigenes (drahtloses oder drahtgebundenes) Datennetz vorgesehen. Hierunter ist zu verstehen, dass über das Datennetz nur Daten übertragen werden, die mit mindestens einen Verarbeitungsauftrag oder dem Betrieb oder Wartung des Datenverarbeitungszentrums (beispielsweise Installierung von Updates) in Bezug stehen. Daten bzw. Signale, die den Betrieb des Offshore-Windenergiesystems betreffen, wie z.B. Steuersignale des Offshore-Windenergiesystems, werden (nur) über ein separates Windenergiekommunikationsnetz übertragen.

Ein anmeldungsgemäßes Datennetz und/oder eine anmeldungsgemäße Kommunikationsverbindung kann zumindest teilweise durch ein Glasfaserkabel, ein Kabel mit Leiter/n aus Metall, einen Supraleiter, mindestens einen Satellitenkommunikationskanal oder einen Kanal, der die Nutzung von quantenphysikalischen Phänomen erlaubt, gebildet sein.

Wie bereits beschrieben wurde, kann das anmeldungsgemäße Offshore-Windenergiesystem, insbesondere die mindestens eine Offshore-Windkraftanlage, eingerichtet sein zum Generieren elektrischer Leistung. Gemäß einer weiteren Ausführungsform des anmeldungsgemäßen Offshore-Windenergiesystems kann das Offshore-Windenergiesystem mindestens eine Leistungssteuereinrichtung umfassen. Die Leistungssteuereinrichtung ist insbesondere zum Steuern des Leistungsflusses zu dem Datenverarbeitungszentrum und/oder zu einem angeschlossenen Onshore-Stromnetz eingerichtet. Die Leistungssteuereinrichtung kann eingerichtet sein zumindest zum Steuern des Versorgens des Datenverarbeitungszentrums durch Einspeisen von einem Teil der generierten elektrischen Leistung in das Datenverarbeitungszentrum. Die Leistungssteuereinrichtung kann eingerichtet sein zum Bestimmen des Teils der generierten elektrischen Leistung, basierend auf mindestens einem bereitgestellten Netzzustandsparameter des mindestens einen an das Offshore-Windenergiesystem (elektrisch) angebundenen bzw. angeschlossenen Onshore-Stromnetzes. Mit anderen Worten ist die Leistungssteuereinrichtung zumindest eingerichtet, die Leistungsmenge zu bestimmen, die dem Datenverarbeitungszentrum zugeführt wird. Die bestimmbare Leistungsmenge ist insbesondere ein Teil der Leistung, die von dem Offshore-Windenergiesystem generiert wird. Der Teil der generierten Leistung, der in das Datenverarbeitungszentrum eingespeist wird, kann grundsätzlich zwischen 0 und 100 % der von dem Offshore-Windenergiesystem (augenblicklich) generierten Leistung liegen. Die tatsächliche Höhe des Teils der generierten Leistung wird gemäß dieser Ausführungsform durch die Leistungssteuereinrichtung bestimmt.

Die Höhe des Teils der generierten Leistung, die dem Datenverarbeitungszentrum zugeführt wird, kann insbesondere zumindest von dem Netzzustand des an das Offshore-Windenergiesystem angeschlossenen (öffentlichen) Onshore-Stromnetzes abhängen. Durch den Netzzustand kann insbesondere angegeben werden, ob das Stromnetz überlastet ist, also (augenblicklich) mehr Leistung in das Stromnetz eingespeist wird als gleichzeitig entnommen wird, oder unterlastet ist, also (augenblicklich) mehr Leistung entnommen wird als gleichzeitig eingespeist wird, oder sich in einem stabilen Zustand befindet, also die (augenblicklich) eingespeiste Leistung im Wesentlichen der entnommenen Leistung entspricht.

Um den Netzzustand bei der Steuerung des Leistungsflusses zu berücksichtigen, kann beispielsweise von einer Netzüberwachungseinrichtung zumindest ein Netzzustandsparameter der Leistungssteuereinrichtung bereitgestellt werden. Ein Netzzustandsparameter ist insbesondere ein Indiz für den (augenblicklichen) Netzzustand. Beispielhafte und nicht abschließende Netzzustandsparameter sind die Netzfrequenz des Stromnetzes, die Netzspannung des Stromnetzes und der Strompreis des Stromnetzes, der für eine Einspeisung erzielt werden kann. Der Strompreis kann vorteilhafterweise als Netzzustandsparameter verwendet werden, da aus der Höhe des Strompreises unmittelbar auf den Netzzustand geschlossen werden kann (z.B. hoher Preis = unterlastet, niedriger Preis = überlastet). Es versteht sich, dass auch eine unmittelbare Netzzustandsangabe (z.B. stabil, unterlastet, überlastet) als Netzzustandsparameter bereitgestellt werden kann.

Die Leistungssteuereinrichtung kann insbesondere eingerichtet sein, bei einer Unterlast des Stromnetzes den Teil der generierten Leistung, mit dem das Datenverarbeitungszentrum gespeist wird, zu reduzieren, insbesondere zu minimieren (bis auf 0 %), und bei einer Überlast den Teil der generierten Leistung zu maximieren, (um den Teil, der in das Onshore-Stromnetz gespeist wird, zu minimieren). Insbesondere kann bei einer detektierten Überlast des Onshore-Stromnetzes die generierte Leistung, die nicht mehr in das Onshore-Stromnetz eingespeist werden darf, zumindest teilweise wertvoll verwendet werden. Es versteht sich, dass der in das Datenverarbeitungszentrum eingespeiste Teil einen maximal zulässigen Betrag nicht übersteigen darf. Indem der Netzzustand bei der Leistungsversorgung des Datenverarbeitungszentrums berücksichtigt wird, kann das Offshore-Windenergiesystem aktiv zur Stabilisierung des mindestens einen Onshore-Stromnetzes, umfassend das Datenverarbeitungszentrum eingesetzt werden. Entsprechend der zur Verfügung stehenden elektrischen Leistung kann, durch eine Steuereinrichtung des Datenverarbeitungszentrums, die zur Verfügung stehende Rechenleistung bzw. die Geschwindigkeit der Abarbeitung des mindestens einen Verarbeitungsauftrags gesteuert werden. Während bei einer geringen zur Verfügung stehenden Leistung die Arbeitsgeschwindigkeit des Datenverarbeitungszentrums reduziert werden kann (z.B. bis auf 0), kann die Arbeitsgeschwindigkeit bei steigender Leistung entsprechend gesteigert werden (bis zu einem zulässigen Maximum).

Mit anderen Worten kann gemäß einer Ausführungsform des anmeldungsgemäßen Systems das Datenverarbeitungszentrum mindestens eine Steuereinrichtung umfassen, eingerichtet zum Steuern der Verarbeitung des mindestens einen Verarbeitungsauftrags, insbesondere zum Steuern der Arbeitsgeschwindigkeit, basierend auf der (augenblicklich) für das Datenverarbeitungszentrum zur Verfügung stehenden elektrischen Leistung. Beispielsweise kann zur Reduzierung der Arbeitsgeschwindigkeit und der damit einhergehenden Reduzierung der verbrauchten elektrischen Leistung mindestens eine Datenverarbeitungseinrichtung einer Mehrzahl von Datenverarbeitungseinrichtung deaktiviert werden und/oder einzelne Funktionen (z.B. ein Prozessor von zwei Prozessoren) mindestens einer Datenverarbeitungseinrichtung deaktiviert werden. In entsprechender Weise kann die Arbeitsgeschwindigkeit gesteigert werden.

Gemäß einer bevorzugten Ausführungsform des Offshore-Windenergiesystems kann das Offshore-Windenergiesystem mindestens eine erste Prognoseeinrichtung umfassen. Die erste Prognoseeinrichtung kann eingerichtet sein zum Prognostizieren der von dem Offshore-Windenergiesystem für mindestens einen (bestimmten) zukünftigen Zeitraum generierbaren (elektrischen) Leistung, basierend auf mindestens einem (bereitgestellten) vorhergesagten meteorologischen Parameter. Alternativ oder (bevorzugt) zusätzlich kann die erste Prognoseeinrichtung eingerichtet sein zum Prognostizieren mindestens eines Netzzustandsparameters des angebundenen Onshore-Stromnetzes für mindestens einen (bestimmten) zukünftigen Zeitraum, basierend auf mindestens einem (bereitgestellten) vorhergesagten meteorologischen Parameter. Die Leistungssteuereinrichtung kann eingerichtet sein zum Bestimmen des Teils der generierten elektrischen Leistung, basierend auf dem prognostizierten Netzzustandsparameter und/oder basierend auf der prognostizierten generierbaren Leistung. Ein prognostizierter Netzzustandsparameter bzw. der korrespondierende Netzzustand und/oder die prognostizierte elektrische Leistung kann vorzugsweise zusätzlich zu einem augenblicklichen Netzzustand und/oder der augenblicklich generierten Leistung (aber auch alternativ) bei der Steuerung des Leistungsflusses in das Datenverarbeitungszentrum oder das angeschlossene Onshore-Stromnetz berücksichtigt werden.

Aus mindestens einem vorhergesagten meteorologischen Parameter (z.B. vorhergesagte Windstärke, Windrichtung etc.), vorzugsweise einer Mehrzahl von meteorologischen Parameter, für den Aufstellungsort des Offshore-Windenergiesystem kann (basierend auf den Leistungsdaten der Windturbinen) für mindestens einen zukünftigen Zeitraum (z.B. nächste Stunde, nächster Tag, nächste Woche etc.) die von dem Offshore-Windenergiesystem (wahrscheinlich) generierbare elektrische Leistung prognostiziert bzw. geschätzt werden.

Vorzugsweise zusätzlich kann aus mindestens einem vorhergesagten meteorologischen Parameter (z.B. vorhergesagte Windstärke, Windrichtung, Bewölkung, Solarstrahlung, Temperatur etc.), vorzugsweise einer Mehrzahl von meteorologischen Parameter, für mindestens einen geographischen Teil-Bereich, insbesondere (nahezu) den geographischen Gesamt-Bereich, des mindestens einen Onshore-Stromnetzes (basierend auf Leistungsdaten des Onshore-Stromnetzes (z.B. Leistungsdaten der angeschlossenen Onshore-Windkraftanlagen oder Photovoltaikanlagen, Leistungsdaten der angeschlossenen (Groß-)Verbraucher)) der Netzzustand bzw. mindestens ein Netzzustandsparameter des Onshore-Stromnetzes für mindestens einen zukünftigen Zeitraum (z.B. nächste Stunde, nächster Tag, nächste Woche etc.) prognostiziert bzw. geschätzt werden. Beispielsweise kann bei vorhergesagter geringer Bewölkung und/oder hoher Solarstrahlung eine Überlastung prognostiziert werden und bei einer starken Bewölkung und/oder geringer Solarstrahlung eine Unterlast prognostiziert werden.

Indem vorzugsweise die generierbare Leistung und insbesondere ein Netzzustandsparameter prognostiziert werden, kann ein Leistungsflussplan mit Solldaten für den Teil der generierten Leistung, der in das Datenverarbeitungszentrum (und/oder den Teil, der in das Onshore-Stromnetz) gespeist werden soll, durch die Leistungssteuereinrichtung erstellt werden. Basierend auf diesem Plan kann die Steuereinrichtung des Datenverarbeitungszentrums einen Soll-Plan zur Steuerung des Datenverarbeitungszentrums erstellen. Eine stabile Steuerung der Leistungsgenerierung durch das Offshore-Windenergiesystem, der Abgabe an das Datenverarbeitungszentrum (und/das Onshore-Stromnetz) und des Datenverarbeitungszentrums kann bereitgestellt werden.

Es versteht sich, dass alternativ auch ein prognostizierter Netzzustand dem Offshore-Windenergiesystem bereitgestellt werden kann. Es versteht sich ferner, dass bei der Prognose historische Daten, Zeitdaten (Jahreszeit, Tageszeit, Wochentag etc.) und dergleichen berücksichtigt werden können. Schließlich versteht es sich, dass eine erste Prognoseeinrichtung zwei separate Prognosemodule umfassen kann, wobei ein erstes Prognosemodul zum Prognostizieren der generierbaren Leistung und ein weiteres Prognosemodul zum Prognostizieren des mindestens einen Netzzustandsparameters vorgesehen sind.

Gemäß einer weiteren Ausführungsform des anmeldungsgemäßen Offshore-Windenergiesystems kann das Offshore-Windenergiesystem mindestens eine zweite Prognoseeinrichtung umfassen. Die zweite Prognoseeinrichtung kann eingerichtet sein zum Prognostizieren der für mindestens einen zukünftigen Zeitraum von dem Datenverarbeitungszentrum benötigten (elektrischen) Leistung, basierend auf dem mindestens einen Verarbeitungsauftrag. Die Leistungssteuereinrichtung kann eingerichtet sein zum Bestimmen des Teils der generierten elektrischen Leistung, basierend auf der prognostizierten benötigten Leistung. Wird beispielsweise prognostiziert, dass eine hohe Rechenleistung für mindestens einen zukünftigen Zeitraum (z.B. nächste Stunde, nächster Tag, nächste Woche etc.) bereitgestellt werden sollte (um beispielsweise ein vorliegendes Arbeitsvolumen in einer vorgegebenen Zeitdauer abzuarbeiten), kann der Teil der generierten Leistung, der in das Datenverarbeitungszentrum eingespeist werden soll, erhöht werden (wenn beispielsweise für den gleichen Zeitraum ein stabiler Netzzustand oder eine Überlast prognostiziert wird). In entsprechender Weise kann die Leistungsteilbestimmung bei einem prognostizierten geringen Leistungsverbrauch durch das Datenverarbeitungszentrum erfolgen.

Insbesondere kann ein optimales Auslastungsmanagement sowohl für das Datenverarbeitungszentrum als auch für die elektrische Energiegenerierung und Verteilung durch diese Ausführungsform bereitgestellt werden.

Grundsätzlich kann bei Bedarf (beispielsweise bei Windstille) auch eine Leistungsversorgung des Datenverarbeitungszentrums durch eine Leistungsentnahme aus dem angeschlossenen Stromnetz erfolgen. Insbesondere kann bei einer detektierten Überlast im angeschlossenen Onshore-Stromnetz elektrische Leistung aus diesem Stromnetz bezogen werden, um damit vorzugsweise das Datenverarbeitungszentrum zu versorgen. Dies kann vorzugsweise durch die Leistungssteuereinrichtung gesteuert werden.

Auch kann gemäß einer weiteren Ausführungsform die Leistungssteuereinrichtung eingerichtet sein zum (permanenten) Blockieren eines Leistungsflusses von dem mindestens einen angebundenen Onshore-Stromnetz in das Datenverarbeitungszentrum. Hierdurch kann sichergestellt werden, dass die Stabilität des angeschlossenen Onshore-Stromnetzes nicht durch eine Leistungsentnahme aus dem Stromnetz beeinträchtigt werden kann.

Die Leistungssteuereinrichtung kann mindestens einen Schalter und mindestens ein Rechenmodul zur Ausführung der oben bestimmten Schritte, insbesondere zur Steuerung des Leistungsflusses in das Datenverarbeitungszentrum und das Onshore-Stromnetz umfassen. Der Schalter kann insbesondere eingerichtet sein, bei einer detektierten Überlast die Offshore-Vorrichtung in einem so genannten "Inselmodus" zu betreiben. In diesem Modus wird keine Leistung in das Onshore-Stromnetz gespeist, sondern nur für die interne Energieversorgung und die Energieversorgung des Datenverarbeitungszentrums genutzt.

Darüber hinaus ist erkannt worden, dass der Offshore-Standort einen erheblichen Vorteil hinsichtlich der Kühlung des Datenverarbeitungszentrums bzw. der mindestens einen Datenverarbeitungseinrichtung des Datenverarbeitungszentrums mit sich bringt. So ist die Umgebungstemperatur in der Regel im Vergleich zu Onshore-Standorten niedriger.

Darüber hinaus wird anmeldungsgemäß gemäß einer Ausführungsform vorgeschlagen, das (kühle) Meerwasser und/oder die hohe Windwahrscheinlichkeit am Offshore-Standort zur Kühlung des Datenverarbeitungszentrums zu verwenden. Vorzugsweise kann das Datenverarbeitungszentrum mindestens ein Kühlsystem umfassen. Das Kühlsystem kann eingerichtet sein zum Kühlen der mindestens einen Datenverarbeitungseinrichtung. Das Kühlsystem kann mindestens eine Luftleitanordnung umfassen, eingerichtet zum Leiten einer Luftströmung entlang der mindestens einen Datenverarbeitungseinrichtung. Insbesondere kann die (vorzugsweise verfahrbare) Luftleitanordnung eine Windströmung nutzen, um die mindestens eine Datenverarbeitungseinrichtung zu kühlen. Beispielsweise kann mindestens ein Eingangsöffnung (in einem Turm, Gehäuse etc.) und eine Ausgangsöffnung (in einem Turm, Gehäuse etc.) vorgesehen sein, um den Luftstrom von der Eingangsöffnung entlang der mindestens eine Datenverarbeitungseinrichtung zu der Ausgangsöffnung zu leiten.

Alternativ oder zusätzlich kann das Kühlsystem mindestens eine Flüssigkeitskühlanordnung mit mindestens einem flüssigen Kühlmedium umfassen, wobei die Flüssigkeitskühlanordnung eingerichtet ist zum Abkühlen des flüssigen Kühlmediums durch Meerwasser. Insbesondere kann das Kühlmedium (z.B. Wasser) zur Kühlung an einer Datenverarbeitungseinrichtung entlang oder durch eine Datenverarbeitungseinrichtung geleitet werden, um die durch die Datenverarbeitungseinrichtung erzeugte Wärme abzuleiten. Um das durch die Datenverarbeitungseinrichtung erwärmte Kühlmedium wieder abzukühlen, kann das Meerwasser genutzt werden. Beispielsweise kann ein entsprechender Rohrabschnitt des Kühlkreislaufes des Kühlsystems mit Meerwasser umspült werden, um das erwärmte Kühlmedium wieder abzukühlen. Eine verbesserte und effizientere Kühlung kann unter Nutzung der am Offshore-Standort vorgesehenen Ressourcen bereitgestellt werden. Durch ein derartige Kühlsysteme kann der Energieverbrauch des Datenverarbeitungszentrums (insbesondere in Vergleich zu Onshore-Zentren) signifikant reduziert werden.

Wie bereits beschrieben wurde, ist ein Vorteil eines Offshore-Standorts die schwierige Erreichbarkeit bzw. physische Abgeschiedenheit des Offshore-Windenergiesystems und damit die verbesserte Sicherheit vor einem unbefugten Eindringen in das Datenverarbeitungszentrum. Um die Sicherheit noch weiter zu verbessern kann gemäß einer weiteren Ausführungsform des Offshore-Windenergiesystems das Offshore-Windenergiesystem mindestens eine Umgebungsüberwachungseinrichtung umfassen. Die Umgebungsüberwachungseinrichtung kann eingerichtet sein zum Überwachen eines physischen Zugangs zu dem Datenverarbeitungszentrum. Die Überwachungseinrichtung kann eine Mehrzahl von Überwachungsmodulen umfassen. Beispielhafte und nicht abschließende Überwachungsmodule sind Radargeräte, Alarmanlagen, optische Überwachungsmodule, z.B. in Form von mindestens einer Kamera, etc. Vorzugsweise können bereits vorhandene Module derart angepasst werden, dass insbesondere der mindestens eine physische Zugang (z.B. eine Tür) des Datenverarbeitungszentrums überwacht wird.

Gemäß einer besonders bevorzugten Ausführungsform der Umgebungsüberwachungseinrichtung kann die Umgebungsüberwachungseinrichtung mindestens einen Sonarsensor umfassen. Der mindestens eine Sonarsensor kann (z.B. zusammen mit einem Auswertemodul) eingerichtet sein zumindest zum Detektieren von Unterwasserfahrzeugen, insbesondere U-Booten. Hierdurch kann die Sicherheit noch weiter verbessert werden. Dies erlaubt es insbesondere besonders vertrauliche Daten in dem Datenverarbeitungszentrum zu verarbeiten, beispielsweise zu speichern.

Um in aufwandsarmer Weise einen entsprechende Sonarsensor an einer besonders geeigneten Überwachungsposition in dem Offshore-Windenergiesystem zu installieren, kann der mindestens eine Sonarsensor vorzugsweise in mindestens einem Fundament oder einem Standbein einer Offshore-Vorrichtung angeordnet (integriert) sein (solange sich der Installationsort unterhalb der Wasseroberfläche befindet). Insbesondere ist erkannt worden, dass der für eine Kollisionsvermeidung mit Unterwasserfahrzeugen ohnehin vorgesehene Sonartransponder mit einer zusätzlichen Sensorfunktion ausgestattet werden kann. So kann in aufwandsarmer Weise eine Implementierung des mindestens einen Sonarsensors durchgeführt werden.

Gemäß einer weiteren Ausführungsform kann das Offshore-Windenergiesystem mindestens einen Notstromgenerator umfassen. Der mindestens eine Notstromgenerator kann eingerichtet sein zum Generieren von elektrischer Leistung. Beispielsweise kann während einer Wartung des Offshore-Windenergiesystems oder bei Windstille die intern benötigte elektrische Leistung durch einen Notstromgenerator generiert werden. Da dieser in der Regel in einem nicht ausgelasteten und damit nicht optimalen Betriebspunkt betrieben wird, kann vorzugsweise zumindest ein Teil der durch den Notstromgenerator (z.B. ein Dieselgenerator) generierten Leistung zum Versorgen des Datenverarbeitungszentrums mit elektrischer Leistung verwendet werden. Neben der Sicherstellung eines Betriebs des Datenverarbeitungszentrums kann der (ohnehin) vorgesehene Notstromgenerator in einem optimaleren Betriebspunkt betrieben werden.

Darüber hinaus kann gemäß einer weiteren Ausführungsform das Offshore-Windenergiesystem mindestens eine Speichereinrichtung umfassen. Die in der Speichereinrichtung gespeicherte Energie kann zum Versorgen des Datenverarbeitungszentrums mit elektrischer Leistung verwendet werden. Insbesondere kann bei Detektion einer Überlast des Onshore-Stromnetzes zumindest ein Teil der elektrischen Leistung, die beispielsweise nicht (mehr) in das Datenverarbeitungszentrum einspeisbar ist (beispielsweise bei Erreichen der für das Datenverarbeitungszentrum maximal zulässigen Leistung), in die mindestens eine Speichereinrichtung gespeist werden. Die gespeicherte Energie kann bei Bedarf zur Versorgung des Datenverarbeitungszentrums verwendet werden (beispielsweise bei Detektion einer Unterlast des Onshore-Stromnetzes).

Beispielhafte und nicht abschließende Speichereinrichtungen sind Batterien und Pumpspeicherwerke. Es versteht sich, dass darüber hinaus auch andere Speichereinrichtungen, wie Wärmenergiespeicher, beispielsweise Kühltanks, Wärmesenke etc., vorgesehen sein können.

Ferner kann das Offshore-Windenergiesystem, gemäß einer weiteren Ausführungsform, über mindestens eine weitere Energiequelle, insbesondere in Form einer Photovoltaikanlage, verfügen. Die durch die Photovoltaikanlage generierte elektrische Leistung kann zumindest teilweise zur Versorgung des Datenverarbeitungszentrums eingesetzt werden.

Ein weiterer Aspekt der Anmeldung ist eine Offshore-Vorrichtung, insbesondere eine Offshore-Substation oder eine Offshore-Windkraftanlage. Die Offshore-Vorrichtung umfasst mindestens eine Datenverarbeitungseinrichtung eines an ein Fernkommunikationsnetz über mindestens eine eigene Kommunikationsverbindung angebundenen Datenverarbeitungszentrums. Die mindestens eine Datenverarbeitungseinrichtung ist eingerichtet zum Bereitstellen von Rechenleistung für eine Abarbeitung mindestens eines über die Kommunikationsverbindung empfangbaren Verarbeitungsauftrags. Das Datenverarbeitungszentrum ist eingerichtet zum Erhalten elektrischer Leistung, die von dem Offshore-Windenergiesystem generiert wird.

Die Offshore-Vorrichtung kann insbesondere eine zuvor beschriebene Offshore-Vorrichtung sein. Die Offshore-Vorrichtung kann vorzugsweise eine zuvor beschrieben Leistungssteuereinrichtung umfassen. Vorzugsweise können zwei oder mehr Offshore-Vorrichtungen, insbesondere die jeweiligen Datenverarbeitungseinrichtungen, über ein eigenes Kommunikationsnetz verbunden sein, um einen Datenaustausch zwischen den jeweiligen Datenverarbeitungseinrichtungen zu ermöglichen.

Darüber hinaus kann gemäß einer weiteren Ausführungsform das Offshore-Windenergiesystem eine HGÜ (Hochspannungs-Gleichstrom-Übertragung)-Kopfstation umfassen, wobei die HGÜ-Kopfstation einen Teil des Datenverarbeitungszentrums umfassen kann. Beispielsweise können mindestens eine Datenverarbeitungseinrichtung auf einer Offshore-Vorrichtung (z.B. Offshore-Windkraftanlage und/oder Offshore-Substation) und mindestens eine weitere Datenverarbeitungseinrichtung auf der HGÜ-Kopfstation angeordnet sein. Die zumindest zwei Datenverarbeitungseinrichtungen können in oben beschriebener Weise miteinander verbunden sein und insbesondere ein verteiltes Datenverarbeitungszentrum bilden. Ein dezentrales Datenverarbeitungszentrum verteilt auf Offshore-Vorrichtung und HGÜ-Kopfstation kann bereitgestellt werden.

Ein noch weiterer Aspekt der Anmeldung ist ein Verfahren zum Betreiben eines zuvor beschriebenen Offshore-Windenergiesystems. Das Verfahren umfasst:
- Generieren, durch das Offshore-Windenergiesystem, elektrischer Leistung,
- Steuern des Versorgens mit elektrischer Leistung des Datenverarbeitungszentrums des Offshore-Windenergiesystems durch Einspeisen von einem Teil der generierten elektrischen Leistung in das Datenverarbeitungszentrum,
- wobei der Teil der generierten elektrischen Leistung bestimmt wird, basierend auf mindestens einem bereitgestellten Netzzustandsparameter des mindestens einen an das Offshore-Windenergiesystem angebundenen Onshore-Stromnetzes.

Es sei angemerkt, dass anmeldungsgemäße Einrichtungen, Module, etc. aus Hardwarekomponenten (z.B. Prozessoren, Schnittstellen, Speichermitteln, etc.) und/oder Softwarekomponenten gebildet sein können.

Die Merkmale der Systeme, Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Offshore-Windenergiesystem, die anmeldungsgemäße Offshore-Vorrichtung und das anmeldungsgemäße Verfahren auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Offshore-Windenergiesystems gemäß der vorliegenden Anmeldung,
- Fig. 2: eine schematische Ansicht eines weiteren Ausführungsbeispiels eines Offshore-Windenergiesystems gemäß der vorliegenden Anmeldung
- Fig. 3a: eine schematische Ansicht eines weiteren Ausführungsbeispiels eines Offshore-Windenergiesystems gemäß der vorliegenden Anmeldung in einem ersten Betriebszustand,
- Fig. 3b: eine schematische Ansicht des Ausführungsbeispiels eines Offshore-Windenergiesystems gemäß Figur 3a in einem weiteren Betriebszustand,
- Fig. 3c: eine schematische Ansicht des Ausführungsbeispiels eines Offshore-Windenergiesystems gemäß Figur 3a in einem weiteren Betriebszustand, und
- Fig. 4: ein Diagramm eines Ausführungsbeispiels eines Verfahrens gemäß der vorliegenden Anmeldung.

Nachfolgend werden für gleiche Elemente gleiche Bezugszeichen verwendet.

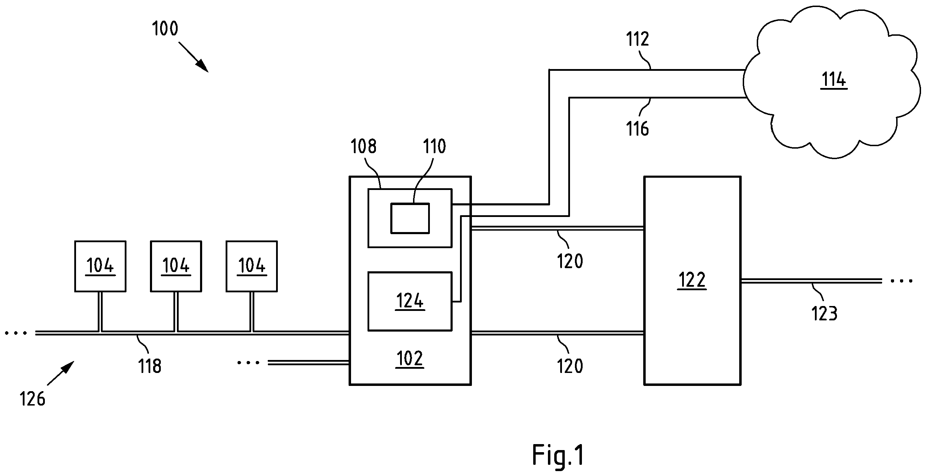

Die Figur 1 zeigt eine schematische Ansicht eines ersten Ausführungsbeispiels eines Offshore-Windenergiesystems 100 gemäß der vorliegenden Anmeldung. Das Offshore-Windenergiesystem 100 umfasst eine Mehrzahl von Offshore-Vorrichtungen 102, 104. Das Offshore-Windenergiesystem 100, insbesondere die Offshore-Vorrichtungen 102, 104, können zumindest 1 km entfernt von der Küste, vorzugsweise zwischen 30 und 100 km entfernt von der Küste, angeordnet sein.

Insbesondere ist eine Offshore-Substation 102 bzw. Offshore-Umspannstation 102 angeordnet. Über ein Offshore-Kabelnetz 118 ist eine Mehrzahl von Windkraftanlagen 104 elektrisch mit der Offshore-Umspannstation 102, insbesondere einer (nicht gezeigten) Transformatoreinrichtung der Offshore-Umspannstation 102, verbunden. Das Kabelnetz 118 umfasst eine Mehrzahl von Seekabeln, die zwischen verschiedenen Windkraftanlagen 104 sowie der Offshore-Substation 102 angeordnet sind.

Darüber hinaus ist ein weiteres Offshore-Kabelnetz 120 mit mindestens einem Seekabel, vorzugsweise zwei Seekabeln, zwischen der Offshore-Umspannstation 102 und einer Onshore-Kopfstation 122 angeordnet. Die Onshore-Kopfstation 122 dient u.a. als elektrischer Anschlusspunkt, um die von dem Windenergiesystem 100 bereitgestellte bzw. erzeugte elektrische Leistung in ein angebundenes Onshore-Stromnetz 123, beispielsweise ein angeschlossenes öffentliches Stromnetz 122, einzuspeisen. Demnach ist das Stromnetz 123 kein Bestandteil des anmeldungsgemäßen Windenergiesystems 100.

Wie ferner aus der Figur 1 zu entnehmen ist, sind die Windkraftanlagen 104 vorliegend in Form eines Strangs 126 angeordnet. Zu Gunsten einer besseren Übersicht ist vorliegend nur ein Strang 126 mit nur drei Offshore-Windkraftanlagen 104 dargestellt. Gemäß anderen Varianten der Anmeldung kann ein Strang vier oder mehr Windkraftanlagen aufweisen und/oder es können zwei oder mehr Stränge vorgesehen sein.

Die Windkraftanlagen 104 eines Stranges 126 sind über elektrische Verbindungen 118 in Form von Seekabeln 118 in Reihe miteinander geschaltet. Über diese elektrischen Verbindungen 118 kann die von den Windkraftanlagen 104 erzeugte elektrische Energie bzw. Leistung z.B. an die Offshore-Substation 102 übertragen werden.

Sämtliche Windkraftanlagen 104 können im Wesentlichen gleich ausgebildet sein. Eine Windkraftanlage 104 kann einen (nicht gezeigten) Generator aufweisen, der die kinetische Energie des Winds in elektrische Energie wandelt.

Anmeldungsgemäß umfasst das Offshore-Windenergiesystem 100 mindestens ein Datenverarbeitungszentrum 108 mit mindestens einer Datenverarbeitungseinrichtung 110, vorzugsweise einer Mehrzahl von Datenverarbeitungseinrichtungen 110. Im vorliegenden Ausführungsbeispiel ist das Datenverarbeitungszentrum 108 in der Offshore-Substation 102 integriert. Bei anderen Varianten der Anmeldung kann das Datenverarbeitungszentrum 108 alternativ oder zusätzlich in bzw. auf mindestens einer weiteren Offshore-Vorrichtung angeordnet sein, wie einer Offshore-Windkraftanlage 104 oder einer Offshore-Datenverarbeitungsplattform, welche im Wesentlichen für die Anordnung eines Datenverarbeitungszentrums in einem Offshore-Windenergiesystem errichtet sein kann.

Eine Datenverarbeitungseinrichtung 110 ist eingerichtet, Rechenleistung für die Abarbeitung bzw. Bearbeitung eines Verarbeitungsauftrags bereitzustellen. Anders ausgedrückt, im Betrieb bearbeitet eine Datenverarbeitungseinrichtung 110 einen oder mehrere Rechenaufträge, wie Blockchaindata-Mining, Speichern vertraulicher Daten, Simulationen etc. Beispielsweise kann das Datenverarbeitungszentrum 108 von anderen Computern, z.B. Client-Computern, für einen bestimmten Service/Verarbeitungsauftrag in Anspruch genommen werden.

Um anderen Rechnern Rechenleistung für die eine Dienstleistung/Abarbeitung eines Verarbeitungsauftrag zur Verfügung stellen zu können, weist das Datenverarbeitungszentrum 108 eine eigene Kommunikationsverbindung 112 zu einem Fernkommunikationsnetz 114, wie dem Internet, auf. Zusätzlich kann eine Steuereinrichtung 124, eingerichtet zum Steuern des Offshore-Windenergiesystems 100 vorgesehen sein. Die Steuereinrichtung 124 kann über eine separate Kommunikationsverbindung 116 an das Fernkommunikationsnetz 114 angeschlossen sein. Beispielsweise können über diese Verbindung 116 Informationen, wie ein Netzzustandsparameter, meteorologischer Parameter etc., empfangen werden. Die Kommunikation, z.B. von Clientrechnern, mit dem Datenverarbeitungszentrum 108 erfolgt hingegen ausschließlich über die eigene Kommunikationsverbindung 112.

Über eine nicht gezeigte elektrische Verbindung kann das Datenverarbeitungszentrum 108 mit elektrischer Leistung versorgt werden, die von dem Offshore-Windenergiesystem 100 generiert wird.

Vorteilhaft ist zudem die physische Abgeschiedenheit des Offshore-Windenergiesystems 100, so dass ein unbefugter Zugang zu einer Datenverarbeitungseinrichtung 110 zumindest erschwert ist.

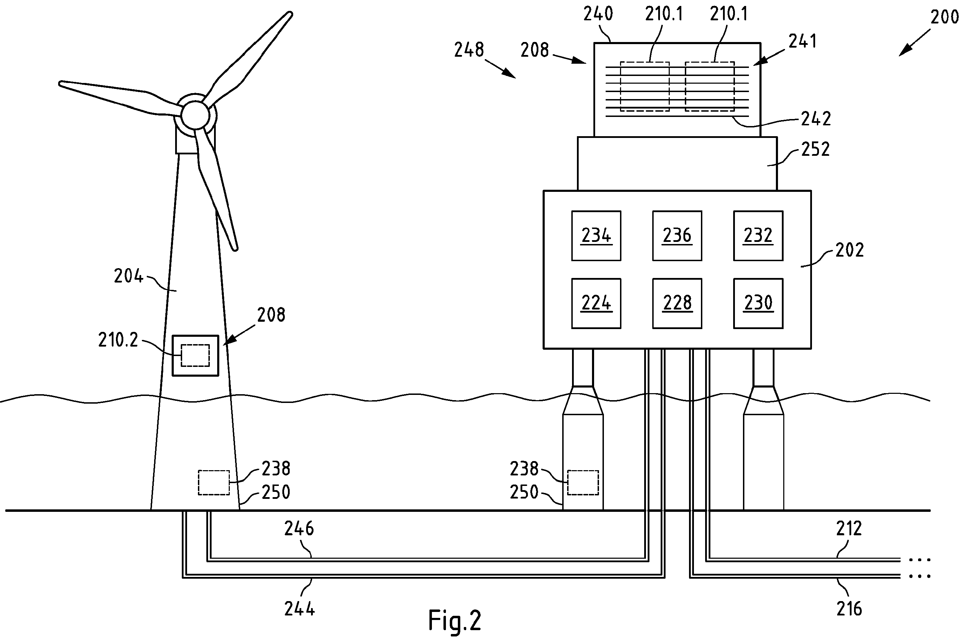

Die Figur 2 zeigt eine schematische Ansicht eines weiteren Ausführungsbeispiels eines Offshore-Windenergiesystems 200 gemäß der vorliegenden Anmeldung. Zur Vermeidung von Wiederholungen werden nachfolgend im Wesentlichen nur die Unterschiede zu dem Ausführungsbeispiel nach Figur 1 beschrieben. Für die anderen Komponenten des Offshore-Windenergiesystems 200 wird insbesondere auf die obigen Ausführungen verwiesen.

Zu Gunsten einer besseren Übersicht sind vorliegend nur zwei Offshore-Vorrichtungen 202 und 204 in Form einer Offshore-Substation 202 und einer Offshore-Windkraftanlage 204 dargestellt. Es versteht sich, dass das Offshore-Windenergiesystem 200 mehr als zwei Offshore-Vorrichtungen umfassen kann.

In dem dargestellten Ausführungsbeispiel umfasst das Offshore-Windenergiesystem 200 ein verteiltes Datenverarbeitungszentrum 208 mit einer Mehrzahl von Datenverarbeitungseinrichtungen 210.1, 210.2. Mindestens eine Datenverarbeitungseinrichtung 210.2 des Datenverarbeitungszentrums 208 ist in der Offshore-Windkraftanlage 204 und mindestens eine weitere Datenverarbeitungseinrichtung 210.1 des Datenverarbeitungszentrums 208 ist in der Substation 202 angeordnet.

Die Datenverarbeitungseinrichtungen 210.1, 210.2 sind miteinander über ein eigenes Kommunikationsnetz 244 verbunden. Über das eigene Datenkommunikationsnetz 244 können nur Daten ausgetauscht werden, die mit dem Betreiben des Datenverarbeitungszentrums 208 einen Bezug haben, beispielsweise die Bearbeitung eines Verarbeitungsauftrags oder das Durchführen eines Updates betreffen. Indem keine anderen Daten über dieses Kommunikationsnetz ausgetauscht werden, kann die Datensicherheit erhöht werden. Insbesondere kann ein eigenes Steuerkommunikationsnetz 246 für den Betrieb der Windenergieerzeugungseinrichtungen (Windkraftanlagen, Umspanneinrichtungen, Generatoren, Kühleinrichtungen für die elektrischen Komponenten der Windkraftanlagen oder Umspanneinrichtungen etc.) des Offshore-Windenergiesystems 200 vorgesehen sein. Hierdurch kann ein Datenverarbeitungszentrum 208 bereitgestellt werden, welches keine Schnittstelle zu dem Steuersystem des Offshore-Windenergiesystems 200 aufweist.

Vorzugsweise kann die eine Datenverarbeitungseinrichtung 210.2 in der Offshore-Windkraftanlage 204, insbesondere in dem Turm, angeordnet sein. Die Vorteile einer entsprechenden Anordnung bestehen darin, dass in dem Turm ohnehin Raum für die Anordnung mindestens eine Datenverarbeitungseinrichtung 210.2 vorhanden ist und eine Datenverarbeitungseinrichtung 210.2 vor äußeren Umgebungseinflüssen geschützt ist.

Wie zu erkennen ist, kann die Offshore-Substation 202 vorliegend ein zusätzliches Deck 248 aufweisen, auf dem in einem Gehäuse 240 eine Mehrzahl von weiteren Datenverarbeitungseinrichtungen 210.1 angeordnet ist. Das zusätzliche Deck 248 kann beispielsweise durch Errichtung eines Flachdachs 252 bereitgestellt werden.

Zur Kühlung der Datenverarbeitungseinrichtungen 210.1 ist, schematisch dargestellt, ein Kühlsystem 241 mit einer Luftleitanordnung 242 in Form mehrerer Lufteinlässe (und -auslässe) vorgesehen, die eingerichtet sind zum Leiten einer Luftströmung entlang der Datenverarbeitungseinrichtungen 210.1. Bei anderen Varianten der Anmeldung kann alternativ oder zusätzlich eine Flüssigkeitskühlanordnung mit mindestens einem flüssigen Kühlmedium vorgesehen sein, wobei die Flüssigkeitskühlanordnung eingerichtet ist zum Abkühlen des flüssigen Kühlmediums durch z.B. Meerwasser. Beispielsweise kann ein Kühlkreislauf durch das Meerwasser geführt sein.

Neben einer Steuereinrichtung 224 umfasst die Offshore-Substation 202 vorliegend eine Leistungssteuereinrichtung 228 und optional eine erste Prognoseeinrichtung 230 und eine zweite Prognoseeinrichtung 232. Die Leistungssteuereinrichtung 228 ist eingerichtet, um den Leistungsfluss in das Datenverarbeitungszentrum 228 und insbesondere in das mindestens eine angeschlossene Onshore-Stromnetz zu steuern. Hierunter ist insbesondere zu verstehen, dass die Leistungssteuereinrichtung 228 die Höhe der Leistung, die in das Datenverarbeitungszentrum 228 gespeist wird (und/oder in das angeschlossene Onshore-Stromnetz), bestimmen kann. Dies meint insbesondere, dass die Leistungssteuereinrichtung 228 eingerichtet ist zum Bestimmen des Teils der von dem Offshore-Windenergiesystem 200 (z.B. den Windturbinen oder dem mindestens einen Notstromgenerator 234) generierten elektrischen Leistung, die in das Datenverarbeitungszentrum 228 gespeist wird (und/oder in das angeschlossene Onshore-Stromnetz).

Für die Bestimmung können Bestimmungsregeln bzw. -algorithmen vorgegeben sein. In den Bestimmungsregeln kann vorgesehen sein, dass die Bestimmung des Teils der generierten Leistung auf der augenblicklich generierten Leistung und des augenblicklichen Netzzustandsparameters des angeschlossenen Onshore-Stromnetzes basiert. Optional kann die augenblickliche und/oder eine für mindestens einen bestimmten zukünftigen Zeitraum von der zweiten Prognoseeinrichtung 232 prognostizierte elektrische Leistung, die von dem Datenverarbeitungszentrum 208 benötigt wird, berücksichtigt werden. Auch kann optional in den Bestimmungsregeln die für mindestens einen bestimmten zukünftigen Zeitraum von der ersten Prognoseeinrichtung 230 prognostizierte elektrische Leistung, die von dem Offshore-Windenergiesystem 200 in diesem Zeitraum erzeugt werden wird, und/oder der für mindestens einen bestimmten zukünftigen Zeitraum von der ersten Prognoseeinrichtung 230 prognostizierte Netzzustandsparameter des angeschlossenen Onshore-Stromnetzes Berücksichtigung finden.

Um den (augenblicklichen) Netzzustand bzw. Netzzustandsparameter zu berücksichtigen, kann mindestens ein (augenblicklicher) Netzzustandsparameter (z.B. Netzfrequenz, Netzspannung, Strompreis etc.), zum Beispiel von einer Netzzustandsüberwachungseinrichtung, bereitgestellt werden. Entsprechend der mindestens einen Bestimmungsregel kann vorgesehen sein, dass bei einer Unterlast die Einspeisung elektrischer Leistung in das Stromnetz Vorrang hat und der Teil, der in das Datenverarbeitungszentrum 208 eingespeist wird, entsprechend reduziert sein kann. Bei einer Überlast kann hingegen die Einspeisung elektrischer Leistung in das Stromnetz reduziert werden und der Teil der elektrischen Leistung, die in das Datenverarbeitungszentrum 208 eingespeist wird, erhöht werden. In ähnlicher Weise können prognostizierte Leistungs- oder Zustandsangaben Berücksichtigung finden.

Um die von dem Offshore-Windenergiesystem 200 während des mindestens einen zukünftigen Zeitraums erzeugte elektrische Leistung zu prognostizieren, kann ein Prognosealgorithmus von der ersten Prognoseeinrichtung 230 angewandt werden, der auf den Leistungsdaten der Windkraftanlagen 204 des Offshore-Windenergiesystem 200 und mindestens einem vorhergesagten meteorologischen Parameter (Windstärke, Windrichtung etc.) basiert, der zumindest einen Einfluss auf die Leistungsgenerierung hat. In ähnlicher Weise kann der mindestens eine Netzzustandsparameter prognostiziert werden, wobei ein Prognosealgorithmus auf die Leistungsdaten des Onshore-Stromnetzes und mindestens einem vorhergesagten meteorologischen Parameter (Windstärke, Windrichtung etc.) basiert, der zumindest einen Einfluss auf die Leistungsgenerierung von Onshore-Erzeugern des Onshore-Stromnetzes hat. Die zweite Prognoseeinrichtung 232 kann, basierend auf einem vorliegenden Auftragsvolumen (dies kann auch ein mit der Abarbeitung eines Auftrags erzielbarer Preis sein) und insbesondere den Leistungsdaten bzw. Verbrauchsdaten des Datenverarbeitungszentrums 208 die elektrische Leistung prognostizieren, die während mindestens eines zukünftigen Zeitraums von dem Datenverarbeitungszentrum 208 (in einer bestimmten Arbeitsgeschwindigkeit) verbraucht werden wird. Hierbei kann bei einer bevorzugten Ausführungsform der Leistungsverbrauch für zumindest zwei unterschiedliche Abarbeitungsgeschwindigkeiten geschätzt werden.

Es versteht sich, dass die Leistungssteuereinrichtung 228 und/oder die optionalen Prognoseeinrichtungen 230, 232 bei anderen Varianten der Anmeldung auch in anderen Offshore-Vorrichtungen und/oder zumindest teilweise in einer Onshore-Vorrichtung angeordnet sein können.

Um das Risiko eines physischen, unbefugten Eindringens in das Datenverarbeitungszentrum 208 weiter zu reduzieren, kann das Offshore-Windenergiesystem 200 eine Umgebungsüberwachungseinrichtung 236, 238 mit einer Mehrzahl von Überwachungsmodulen 236, 238 umfassen. Das erste, schematisch dargestellte, Überwachungsmodul 236 kann beispielsweise ein Kamerasystem 236 sein. Bei dem weiteren Überwachungsmodul 238 kann es sich um einen in einem Standfuß 250 (oder einem Fundament) einer Offshore-Vorrichtung 202, 204 angeordneten Sonarsensor 238 handeln. Der Sonarsensor 238 kann insbesondere zum Detektieren von Unterwasserfahrzeugen eingerichtet sein.

Es versteht sich, dass gemäß anderen Varianten der Anmeldung andere und/oder weitere Überwachungsmodule vorgesehen sein können, wie Radargeräte, Alarmanlagen etc.

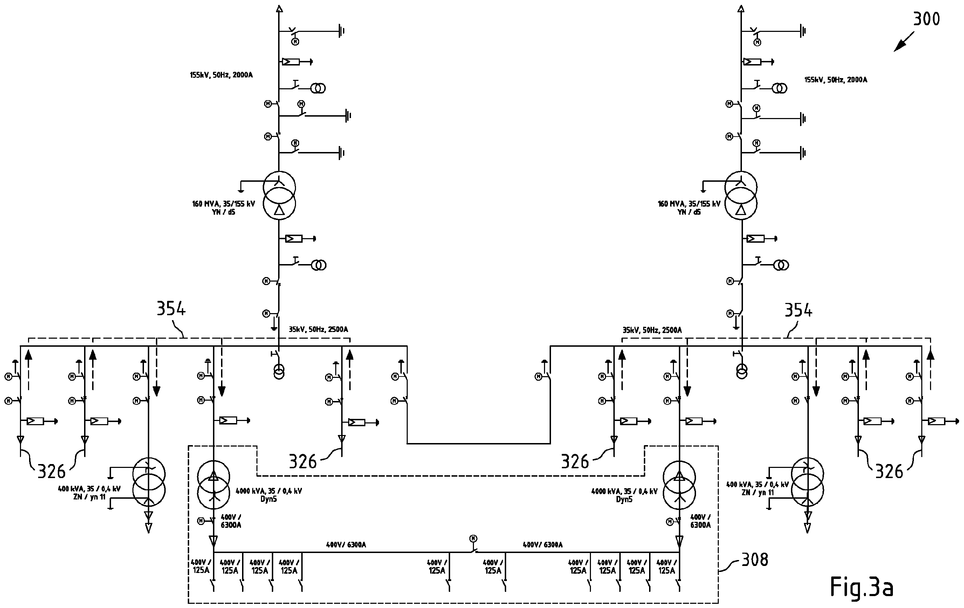

Die Figuren 3a bis 3c zeigen jeweils eine schematische Ansicht eines weiteren Ausführungsbeispiels eines Offshore-Windenergiesystems 300 in verschiedenen Betriebszuständen. Insbesondere ist das Offshore-Windenergiesystem 300 in Form eines elektrischen Ersatzschaltbilds dargestellt. Zur Vermeidung von Wiederholungen werden nachfolgend im Wesentlichen nur die Unterschiede zu den vorherigen Ausführungsbeispielen nach Figur 1 und 2 beschrieben. Für die anderen Komponenten des Offshore-Windenergiesystems 300 wird insbesondere auf die obigen Ausführungen verwiesen.

Insbesondere zeigen die drei Ansichten der Figuren 3a bis 3c unterschiedliche Leistungsflussrichtungen, die durch gestrichelte Pfeile 354 angedeutet sind. In der Figur 3a ist der Fall dargestellt, dass Leistung (nur) von den Windkraftanlagen in das Datenverarbeitungszentrum 308 eingespeist wird. Es versteht sich, dass in der Regel zusätzlich Leistung von den Offshore-Windkraftanlagen in das angeschlossene Onshore-Stromnetz geleitet werden kann.

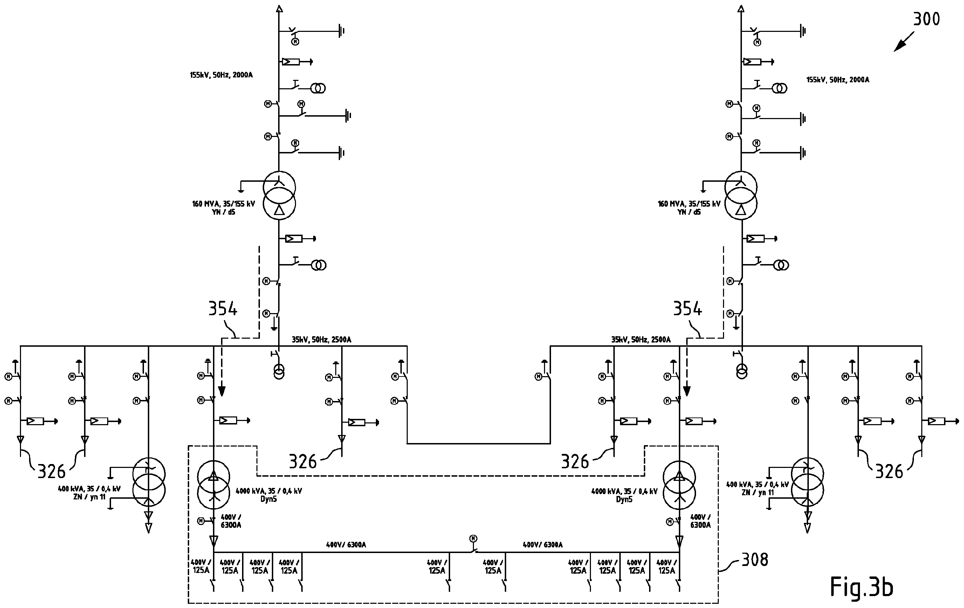

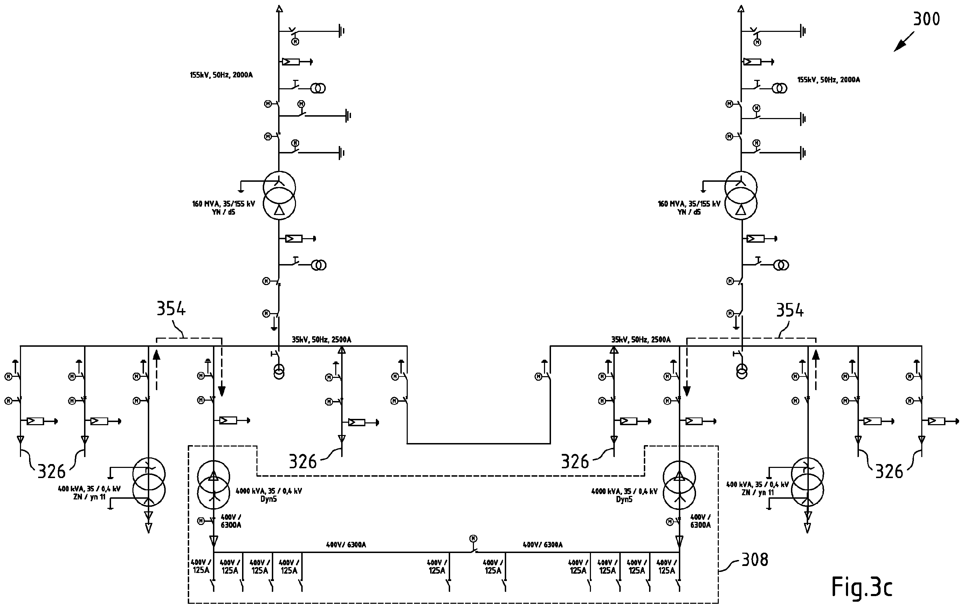

In Figur 3b ist der Fall dargestellt, dass die Leistung, zumindest teilweise, aus dem Onshore-Stromnetz, durch das Datenverarbeitungszentrum 308 bezogen wird. Figur 3c zeigt schließlich den Betriebszustand, in dem die Leistung für das Datenverarbeitungszentrum 308 aus dem mindestens einen Notstromgenerator geliefert wird.

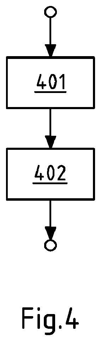

Die Figur 4 zeigt ein Diagramm eines Verfahrens zum Betreiben eines Offshore-Windenergiesystem, insbesondere nach einem der vorherigen Ausführungsbeispiele.

In einem ersten Schritt 401 kann, durch das Offshore-Windenergiesystem, insbesondere durch die mindestens eine Offshore-Windkraftanlage und/oder einem Notstromgenerator, elektrische Leistung generiert werden. Zusätzlich kann elektrische Leistung, gemäß einer weiteren Variante, aus einem angeschlossenen Onshore-Stromnetz eingespeist werden.

In einem weiteren Schritt 402, der vorzugsweise parallel zu dem ersten Schritt 401 ausgeführt wird, kann das Versorgen eines Datenverarbeitungszentrums des Offshore-Windenergiesystems mit elektrischer Leistung gesteuert werden durch Einspeisen von einem Teil der generierten elektrischen Leistung in das Datenverarbeitungszentrum, wie zuvor beschrieben wurde.

Insbesondere kann der Teil der generierten elektrischen Leistung bestimmt werden, basierend auf mindestens einem bereitgestellten Netzzustandsparameter mindestens eines an das Offshore-Windenergiesystem angebundenen Onshore-Stromnetzes.

## Patentansprüche

1. Offshore-Windenergiesystem (100, 200, 300), umfassend:
- eine Mehrzahl von Offshore-Vorrichtungen (102, 104, 202, 204),
- wobei die Mehrzahl von Offshore-Vorrichtungen (102, 104, 202, 204) mindestens eine Offshore-Substation (102, 202) und mindestens eine Offshore-Windkraftanlage (104, 204) umfasst,
- wobei mindestens eine Offshore-Vorrichtung (102, 104, 202, 204) zumindest teilweise ein an ein Fernkommunikationsnetz (114) über mindestens eine eigene Kommunikationsverbindung (112, 214) angebundenes Datenverarbeitungszentrum (108, 208, 308) mit mindestens einer Datenverarbeitungseinrichtung (110, 210.1, 210.2) umfasst,
- wobei die mindestens eine Datenverarbeitungseinrichtung (110, 210.1, 210.2) eingerichtet ist zum Bereitstellen von Rechenleistung für eine Abarbeitung mindestens eines über die Kommunikationsverbindung (112, 212) empfangbaren Verarbeitungsauftrags, und
- wobei das Offshore-Windenergiesystem (100, 200, 300) eingerichtet ist zum Versorgen des Datenverarbeitungszentrums (108, 208, 308) mit elektrischer Leistung.

2. Offshore-Windenergiesystem (100, 200, 300) nach Anspruch 1, **dadurch gekennzeichnet, dass** mindestens eine Datenverarbeitungseinrichtung (110, 210.1, 210.2) des Datenverarbeitungszentrums (108, 208, 308) in der mindestens einen Offshore-Windkraftanlage (104, 204) angeordnet ist.

3. Offshore-Windenergiesystem (100, 200, 300) nach Anspruch 1 oder 2, **dadurch gekennzeichnet, dass**
- mindestens eine Datenverarbeitungseinrichtung (110, 210.1, 210.2) des Datenverarbeitungszentrums (108, 208, 308) in der Offshore-Substation (102, 204) angeordnet ist,
- wobei die Offshore-Substation (102, 204) vorzugsweise ein eigenes Deck (248) zur Anordnung einer Mehrzahl von Datenverarbeitungseinrichtungen (110, 210.1, 210.2) auf der Offshore-Substation (104, 204) umfasst.

4. Offshore-Windenergiesystem (100, 200, 300) nach einem der vorherigen Ansprüche, **dadurch gekennzeichnet, dass**
- das Datenverarbeitungszentrum (108, 208, 308) eine Mehrzahl von Datenverarbeitungseinrichtungen (110, 210.1, 210.2) umfasst,
- wobei eine erste Datenverarbeitungseinrichtung (110, 210.1, 210.2) in einer ersten Offshore-Vorrichtung (102, 104, 202, 204) angeordnet ist und eine weitere Datenverarbeitungseinrichtung (110, 210.1, 210.2) in einer weiteren Offshore-Vorrichtung (102, 104, 202, 204) angeordnet ist, und
- wobei die erste Datenverarbeitungseinrichtung (110, 210.1, 210.2) mit der weiteren Datenverarbeitungseinrichtung (110, 210.1, 210.2) über ein eigenes Kommunikationsnetz (244) verbunden ist.

5. Offshore-Windenergiesystem (100, 200, 300) nach einem der vorherigen Ansprüche, **dadurch gekennzeichnet, dass**
- das Offshore-Windenergiesystem (100, 200, 300) eingerichtet ist zum Generieren elektrischer Leistung,
- das Offshore-Windenergiesystem (100, 200, 300) mindestens eine Leistungssteuereinrichtung (228) umfasst,
- wobei die Leistungssteuereinrichtung (228) eingerichtet ist zumindest zum Steuern des Versorgens des Datenverarbeitungszentrums (108, 208, 308) durch Einspeisen von einem Teil der generierten elektrischen Leistung in das Datenverarbeitungszentrum (108, 208, 308),
- wobei die Leistungssteuereinrichtung (228) eingerichtet ist zum Bestimmen des Teils der generierten elektrischen Leistung, basierend auf mindestens einem bereitgestellten Netzzustandsparameter des mindestens einen an das Offshore-Windenergiesystem (100, 200, 300) angebundenen Onshore-Stromnetzes (123).

6. Offshore-Windenergiesystem (100, 200, 300) nach Anspruch 5, **dadurch gekennzeichnet, dass**
- das Offshore-Windenergiesystem (100, 200, 300) mindestens eine erste Prognoseeinrichtung (230) umfasst,
- wobei die erste Prognoseeinrichtung (230) eingerichtet ist zum Prognostizieren der von dem Offshore-Windenergiesystem (100, 200, 300) für einen zukünftigen Zeitraum generierbaren Leistung, basierend auf mindestens einem vorhergesagten meteorologischen Parameter, und/oder
- wobei die erste Prognoseeinrichtung (230) eingerichtet ist zum Prognostizieren mindestens eines Netzzustandsparameters des angebundenen Onshore-Stromnetzes (123) für mindestens einen zukünftigen Zeitraum, basierend auf mindestens einem vorhergesagten meteorologischen Parameter,
und
- wobei die Leistungssteuereinrichtung (228) eingerichtet ist zum Bestimmen des Teils der generierten elektrischen Leistung, basierend auf dem prognostizierten Netzzustandsparameter und/oder basierend auf der prognostizierten generierbaren Leistung.

7. Offshore-Windenergiesystem (100, 200, 300) nach Anspruch 5 oder 6, **dadurch gekennzeichnet, dass**
- das Offshore-Windenergiesystem (100, 200, 300) mindestens eine zweite Prognoseeinrichtung (232) umfasst,
- wobei die zweite Prognoseeinrichtung (232) eingerichtet ist zum Prognostizieren der für mindestens einen zukünftigen Zeitraum von dem Datenverarbeitungszentrum benötigten Leistung, basierend auf dem mindestens einen Verarbeitungsauftrag, und
- wobei die Leistungssteuereinrichtung (228) eingerichtet ist zum Bestimmen des Teils der generierten elektrischen Leistung, basierend auf der prognostizierten benötigten Leistung.

8. Offshore-Windenergiesystem (100, 200, 300) nach einem der vorherigen Ansprüche, **dadurch gekennzeichnet, dass**
- das Datenverarbeitungszentrum (108, 208, 308) mindestens ein Kühlsystem (241) umfasst, eingerichtet zum Kühlen der mindestens einen Datenverarbeitungseinrichtung (110, 210.1, 210.2),
- wobei das Kühlsystem (241) mindestens eine Luftleitanordnung (242) umfasst, eingerichtet zum Leiten einer Luftströmung entlang der mindestens einen Datenverarbeitungseinrichtung (110, 210.1, 210.2), und/oder
- wobei das Kühlsystem (241) mindestens eine Flüssigkeitskühlanordnung mit mindestens einem flüssigen Kühlmedium umfasst,
- wobei die Flüssigkeitskühlanordnung eingerichtet ist zum Abkühlen des flüssigen Kühlmediums durch Meerwasser.

9. Offshore-Windenergiesystem (100, 200, 300) nach einem der vorherigen Ansprüche, **dadurch gekennzeichnet, dass**
- das Offshore-Windenergiesystem (100, 200, 300) mindestens eine Umgebungsüberwachungseinrichtung (234, 236, 238) umfasst,
- wobei die Umgebungsüberwachungseinrichtung (234, 236, 238) eingerichtet ist zum Überwachen eines physischen Zugangs zu dem Datenverarbeitungszentrum (108, 208, 308).

10. Offshore-Windenergiesystem (100, 200, 300) nach Anspruch 9, **dadurch gekennzeichnet, dass**
- die Umgebungsüberwachungseinrichtung (234, 236, 238) mindestens einen Sonarsensor (238) umfasst, eingerichtet zumindest zum Detektieren von Unterwasserfahrzeugen,
- wobei der mindestens eine Sonarsensor (238) vorzugsweise in mindestens einem Fundament oder einem Standbein (250) einer Offshore-Vorrichtung (102, 104, 202, 204) angeordnet ist.

11. Offshore-Vorrichtung (102, 104, 202, 204), insbesondere Offshore-Substation (102, 202) oder Offshore-Windkraftanlage (104, 204), eines Offshore-Windenergiesystem (100, 200, 300), insbesondere eines Offshore-Windenergiesystem (100, 200, 300) nach einem der vorherigen Ansprüche, umfassend:
- mindestens eine Datenverarbeitungseinrichtung (110, 210.1, 210.2) eines an ein Fernkommunikationsnetz (114) über mindestens eine eigene Kommunikationsverbindung (112, 212) angebundenes Datenverarbeitungszentrums (108, 208, 308),
- wobei die mindestens eine Datenverarbeitungseinrichtung (110, 210.1, 210.2) eingerichtet ist zum Bereitstellen von Rechenleistung für eine Abarbeitung mindestens eines über die Kommunikationsverbindung (112, 212) empfangbaren Verarbeitungsauftrags, und
- wobei die mindestens eine Datenverarbeitungseinrichtung (110, 210.1, 210.2) eingerichtet ist zum Erhalten elektrischer Leistung, die von dem Offshore-Windenergiesystem (100, 200, 300) generiert wird.

12. Verfahren zum Betreiben eines Offshore-Windenergiesystem (100, 200, 300) nach einem der vorherigen Ansprüche 1 bis 10, umfassend:
- Generieren, durch das Offshore-Windenergiesystem (100, 200, 300), elektrischer Leistung,
- Steuern des Versorgens eines Datenverarbeitungszentrums (108, 208, 308) des Offshore-Windenergiesystems (100, 200, 300) mit elektrischer Leistung durch Einspeisen von einem Teil der generierten elektrischen Leistung in das Datenverarbeitungszentrum (108, 208, 308),
- wobei der Teil der generierten elektrischen Leistung bestimmt wird, basierend auf mindestens einem bereitgestellten Netzzustandsparameter mindestens eines an das Offshore-Windenergiesystem (100, 200, 300) angebundenen Onshore-Stromnetzes (123).
